# EUROPÄISCHE PATENTSCHRIFT

(11) **EP 1 023 330 B1**
(45) Veröffentlichungstag und Bekanntmachung des Hinweises auf die Patenterteilung: **03.09.2003**
(21) Anmeldenummer: 98951471.6
(22) Anmeldetag: 26.09.1998
(51) Int. Cl.: C08C 4/00, C08F 6/00

(54) **VERFAHREN ZUM ENTGASEN VON KAUTSCHUK AUS DER GASPHASENPOLYMERISATION**
PROCESS FOR DEGASSING RUBBER FROM GASEOUS PHASE POLYMERISATION
PROCEDE DE DEGAZAGE DE CAOUTCHOUC OBTENU PAR POLYMERISATION EN PHASE GAZEUSE

(30) Priorität: 10.10.1997 DE 19744709
(43) Veröffentlichungstag der Anmeldung: 02.08.2000
(73) Patentinhaber: Bayer Aktiengesellschaft, 51368 Leverkusen (DE)
(72) Erfinder: BAMBERGER, Thomas, D-47051 Duisburg (DE); HAENDELER, Friedrich, Mt. Pleasant, SC 29464 (US); MERSMANN, Franz-Josef, D-51427 Bergisch Gladbach (DE); SCHNEIDER, Jürgen, D-50668 Köln (DE)
(86) Internationale Anmeldenummer: EP9806126
(87) Internationale Veröffentlichungsnummer: WO99019367

(56) Entgegenhaltungen:
- EP-A- 0 765 886
- DE-A- 3 721 769
- DE-A- 19 512 116
- PATENT ABSTRACTS OF JAPAN vol. 096, no. 011, 29. November 1996 & JP 08 179562 A (CANON INC), 12. Juli 1996

## Beschreibung

Die vorliegende Anmeldung betrifft ein Verfahren zur Entgasung von Kautschukpartikeln aus der Gasphasenpolymerisation, bei dem die Kautschukpartikel in einem Vibrationsfließbett ständig in Bewegung gehalten werden und gleichzeitig mit einem Gasstrom durchströmt werden.

Die Polymerisation von Polyolefinen in der Gasphase ist ein seit langem bekanntes Verfahren, das bereits 1968 zum ersten Mal großtechnisch realisiert wurde (Ullmanns Encyklopädie der technischen Chemie, 4. Auflage 1980, Bd. 19, S. 186 ff).

Die eigentliche Polymerisationsreaktion findet bei diesem Verfahren in einem Wirbelbettreaktor statt, der aus einer Reaktions- und einer darüberliegenden Beruhigungszone, in der die Feststoffpartikel weitgehend von der Gasphase getrennt werden, besteht. Die Monomeren, Additive und der Katalysator werden in die Reaktionszone eingeleitet. Zur Aufrechterhaltung eines Wirbelbetts wird dem Reaktor, von unten, ein Kreisgasstrom zugeführt. Dieser Kreisgasstrom, der im wesentlichen aus den nicht umgesetzten Monomeren besteht, wird am Kopf des Reaktors wieder abgezogen, von Restpartikeln befreit, gekühlt und in den Reaktor zurückgeführt. Das entstehende Polymerisat wird aus der Reaktionszone kontinuierlich oder semi-kontinuierlich abgezogen und weiterbehandelt.

Diese Weiterbehandlung besteht u.a. darin, daß die hergestellten Polymerpartikel entgast werden, weil an die Reinheit der Polymerpartikel heutzutage große Anforderungen gestellt werden.

Beim Entgasen werden die Restmonomeren und sonstigen Verunreinigungen, die bei den entsprechenden Temperaturen einen hinreichenden Dampfdruck haben, aus den klebrigen Polymeren, das in einer Gasphasenpolymerisation hergestellt worden sind, abgestrippt.

Die Entgasung der Kautschukpartikel, wird insbesondere dadurch erschwert, daß die Kautschukpartikel klebrig sind. Diese Klebrigkeit der Kautschukpartikel führt zu einer Partikelagglomeration und damit zu einer reduzierten Stoffaustauschfläche. Ferner verkleben die Kautschukpartikel auch die Apparate, wodurch deren Standzeit verkürzt wird.

Derzeit werden die Restmonomeren zum Beispiel in Extrudern entfernt, die entweder unter Unterdruck stehen oder durch die ein Schleppgas geleitet wird. Dieses Verfahren hat den Nachteil, daß der Restmonomergehalt der Polymerpartikel entweder nicht ausreichend abgesenkt werden kann oder das Verfahren apparativ sehr aufwendig ist. Ein anderes Verfahren ist das Entfernen von Monomeren in einem von Schleppgas durchströmten Festbett. Hier kann es bei Kautschuk sehr schnell zu einem Verklumpen kommen, mit dem ein schlechtes Entgasungsergebnis und ein problematischer Austrag einhergehen.

Es stellt sich deshalb die Aufgabe, ein Verfahren zur Entgasung von Kautschuken aus der Gasphasenpolymerisation zur Verfügung zu stellen, das die Nachteile des Standes der Technik nicht aufweist.

Die Aufgabe wird erfindungsgemäß durch die Bereitstellung eines Verfahrens zur Entgasung von Kautschuk aus der Gasphasenpolymerisation gelöst, bei dem die Kautschukpartikel in einem Vibrationsfließbett ständig in Bewegung gehalten und gleichzeitig von einem Gasstrom durchströmt werden.

Das erfindungsgemäße Verfahren wird vorzugsweise in einem Apparat durchgeführt, der hauptsächlich aus einem vibrierenden und mit einem Gas durchströmbaren Boden besteht. Dieser Boden ist vorzugsweise horizontal angeordnet und hat vorzugsweise eine rechteckige Grundfläche, wobei auch jede andere Form möglich ist. Der Boden kann als Lochblech, als Schlitzlochblech, als Conidurblech oder als jede andere luftdurchlässige Geometrie ausgeführt werden. Bevorzugt werden aber Lochbleche eingesetzt. Die Bohrungen haben bevorzugt einen Durchmesser von 1 bis 4 mm. Die Teilung und der Abstand der Bohrungen werden so gewählt, daß sich eine freie Fläche von 1 bis 6%, vorzugsweise 1,3 bis 4% ergibt.

Erfindungsgemäß muß der Boden mit einer Frequenz von vorzugsweise 200 bis 2000 min⁻¹, besonders bevorzugt 1400 bis 1600 min⁻¹, schwingen. Die Amplitude sollte dabei vorzugsweise 1 bis 25 mm, besonders bevorzugt 3 bis 10 mm betragen.

Die zu entgasenden Polymerpartikel befinden sich auf dem Boden, wobei eine maximale Höhe des Vibrationsfließbetts von 200 mm nicht überschritten werden sollte. Vorzugsweise beträgt die Höhe des Vibrationsfließbetts 80 bis 150 mm.

Der Boden und die darauf liegenden Polymerpartikel werden mit einem Gas durchströmt, das vorzugsweise auf 60 bis 120 °C erwärmt ist. Bevorzugt handelt es sich bei dem Gas um technisches N₂. Ebenfalls bevorzugt kann es sich bei dem Gasstrom aber auch um ein Gemisch aus N₂ und Wasserdampf oder um reinen Wasserdampf handeln Der Wasserdampf ist vorzugsweise überhitzt.

Die Gasbelastung des Bodens beträgt vorzugsweise 1500-4000 m³/m²h.

Die Entgasung der Kautschukpartikel kann sowohl kontinuierlich als auch diskontinuierlich erfolgen. Die Verweilzeit der Kautschukpartikel auf dem Boden ist nach dem noch zulässigen Gehalt an Restmonomeren in den Kautschukpartikeln zu bemessen. Vorzugsweise beträgt sie jedoch zwischen 2 Minuten und einer halben Stunde.

In einer bevorzugten Ausführungsform werden die Kautschukpartikel und der Gasstrom im Kreuzstrom geführt. Diese Verfahrensweise wird dadurch realisiert, daß die Kautschukpartikel auf einer Seite des Bodens aufgegeben und auf der gegenüberliegenden Seite wieder abgezogen werden, während sie von unten mit dem Gas durchströmt werden. Die Verfahrensweise hat den Vorteil, daß die Kautschukpartikel während des Entgasens weitergefördert werden.

Der zur Entgasung verwendete Gasstrom wird vorzugsweise im Kreis gefahren.

Mit dem erfindungsgemäßen Verfahren können in der Gasphase hergestellte Polymerpartikel jeglicher Art entgast werden, besonders bevorzugt können Kautschukpartikel jeglicher Art entgast werden.

Polymere im Sinne der Erfindung sind z.B. Poly-α-Olefine, Polyisopren, Polystyrol, SBR, IIR, Polyisobuten Polychloropren, Silikone und Copolymere aus Ethylen und einein oder mehrerer der folgenden Verbindungen: Acrylnitril, Malonsäureester, Vinylacetat, Acryl- und Methacrylsäurester, Vinylacetat, Acryl- und Methacrylsäureester, α-Olefine, Diene und Triene.

Kautschuke im Sinne der Erfindung sind unvernetzte, aber vernetzbare Polymere, die durch die Vernetzung in den gummielastischen Zustand überführt werden können

Vorzugsweise wird das erfindungsgemäße Verfahren jedoch bei der Gasphasenpolymerisation von EPM, EPDM, SBR, NBR, Polyisopren und BR eingesetzt.

Vorzugsweise haben die Polymerpartikel eine kugelige Form mit einem Durchmesser von vorzugsweise 1-7 mm.

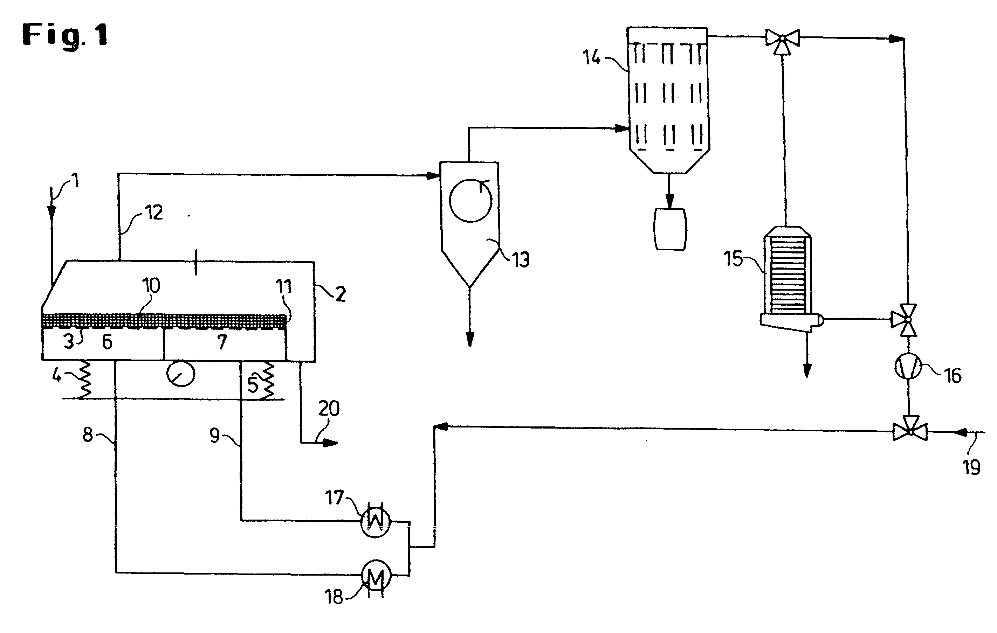

Im folgenden wird die Erfindung anhand der **Figur 1** erläutert

**Fig. 1** zeigt das erfindungsgemäße Verfahren mit einer Kreisgasführung.

In **Figur 1** ist die erfindungsgemäße Entgasung dargestellt. Die mit Restmonomer beladenen Kautschukpartikel, die in einer Gasphasenreaktion hergestellt wurden, werden kontinuierlich auf der linken Seite 1 in den Kanalvibrationsfließbetttrockner 2 geleitet. Dieser Trockner besteht hauptsächlich aus einem gelochten Boden 3, der schwingend gelagert ist und in diesem Beispiel durch einen Unwuchtmotor in Schwingungen versetzt wird. Der gelochte Boden wird von unten durch zwei Kammern 6 und 7 mit einem heißen Gasstrom beaufschlagt, die ihrerseits durch die Leitungen 8 und 9 gespeist werden. Alternativ kann die Kammer 7 mit kaltem Gas zur Kühlung beaufschlagt werden.

Nachdem das beladene Kautschukpartikel über den Einlaß 1 auf den vibrierenden Boden des Kanalvibrationsfließbetttrockners 2 dosiert worden ist, wird es von dem Boden in Schwingungen versetzt. Gleichzeitig wird es von unten von dem Gas durchströmt, so daß sich die fluidisierte Schicht 10 ausbildet. In dieser Schicht wird das Kautschukpartikel entgast und zusätzlich von links nach recht gefördert, wo es den Apparat frei oder nahezu frei von Restmonomerem durch den Auslaß 20 verläßt. Durch diese Verfahrensweise werden die Kautschukpartikel und der Gasstrom im Kreuzstrom geführt. Die Höhe des Vibrationsfließbetts 10 auf dem Boden 3 wird durch die Höhe des Wehres 11 bestimmt. Alternativ kann auch auf ein Wehr verzichtet werden, dann muß aber der Wurfwinkel des Apparates so eingestellt werden, daß die gewünschte Verweilzeit erreicht wird.

Der mit Restmonomer angereicherte Gasstrom wird am Kopf des Apparates durch die Leitungen 12 abgezogen und zunächst einmal von Polymerpartikeln, die durch den Gasstrom mitgerissen wurden, gereinigt. Die Reinigung erfolgt mittels eines Zyklons 13 und eines Filters 14. Danach wird zumindest ein Teil des Gasstroms über einen Kondensator geleitet, um das Restmonomere zumindest teilweise auszukondensieren. Der so gereinigte Gasstrom wird dann mit dem Ventilator 16 verdichtet, bevor er durch die Wärmetauscher 17 und 18 erwärmt und dann in den Kanalvibrationsfließbetttrockners 2 recycliert wird. Durch den Anschluß 19 kann gegebenenfalls Gas nachdosiert werden.

Die Verteilung des Gasstroms in zwei Leitungen 8 und 9 mit jeweils einem Wärmetauscher 18 und 17 ermöglicht eine unterschiedliche Temperaturführung in der fluidisierten Schicht 10.

Mit dem erfindungsgemäßen Verfahren ist es möglich, sehr geringe Restmonomergehalte in den Kautschukpartikeln zu erzielen, ohne das Produkt zu schädigen. Langzeitversuche haben gezeigt, daß die eingesetzten Apparate nicht verkleben und damit eine hohe Standzeit bei einem geringen Wartungsaufwand aufweisen. Ferner ist das erfindungsgemäße Verfahren vergleichsweise günstig.

### Beispiel:

368 g eines in der Gasphase hergestellten Polybutadienkautschuks mit einem Restbutadiengehalt von 1,4% wurde in einem vibrierenden Batch-Fließbetttrockner mit 80°C heißem Stickstoff entgast. Der Volumenstrom betrug 30 Norm-m³/h. Der Fließbetttrockner von der Firma Vibra/Offenbach (D) verfügte über eine fluidisierbare Grundfläche von 0,15 m x 0,15 m. Der als Lochblech ausgeführte Anströmboden wies Bohrungen mit einem Durchmesser von 2,5 mm auf, die einen Abstand von 19,5 mm bei Dreiecksteilung hatten, so daß sich eine freie Fläche von 1,3 % ergab. Die Vibrationsschwingung hatte eine Frequenz von 1490 min⁻¹ bei einer Amplitude von 2,5 mm. Im fluidisierten Zustand ergab sich eine ungefähre Höhe des Kautschuks von 40 mm, was einer Bettdichte von 400 kg/m³ entspricht.

Nach 5 min Verweilzeit konnte der Gehalt an Restbutadien im Polymerpartikel bereits auf 60 ppm gesenkt werden. Nach 10 min Verweilzeit lag der Restbutadiengehalt bereits unter 10 ppm.

## Patentansprüche

1. Verfahren zur Entgasung von Polymer-, insbesondere Kautschukpartikeln aus der Gasphasenpolymerisation, **dadurch gekennzeichnet, daß** die Polymerpartikel in einem Vibrationsfließbett ständig in Bewegung gehalten werden und gleichzeitig mit einem Gasstrom beaufschlagt werden

2. Verfahren nach Anspruch 1, **dadurch gekennzeichnet, daß** das Vibrationsfließbett durch einen vibrierenden, mit Gas durchströmbaren Boden erzeugt wird.

3. Verfahren nach einem der Ansprüche 1 oder 2, **dadurch gekennzeichnet, daß** der Boden mit 200 min⁻¹ bis 2000 min⁻¹, vorzugsweise mit 1400 min⁻¹ bis 1600 min⁻¹ schwingt und daß die Amplitude 1 bis 25 mm, vorzugsweise 3 - 10 mm beträgt.

4. Verfahren nach einem der Ansprüche 1 bis 3, **dadurch gekennzeichnet, daß** der Gasstrom ein Stickstoffstrom oder ein Stickstoff-/Wasserdampfstrom oder ein reiner Wasserdampfstrom ist und eine Temperatur von 60°C bis 120 °C aufweist.

5. Verfahren nach einem der Ansprüche 1 bis 4, **dadurch gekennzeichnet, daß** die Kautschukpartikel und der Gasstrom im Kreuzstrom geführt werden.

6. Verfahren nach einem der Ansprüche 1 bis 5, **dadurch gekennzeichnet, daß** der Gasstrom im Kreis geführt wird.

7. Verfahren nach einem der Ansprüche 1 bis 6, **dadurch gekennzeichnet, daß** die Kautschukpartikel EPM, EPDM und BR sind.

## Claims

1. A process for degassing polymer particles, in particular rubber particles, from gaseous phase polymerisation, **characterised in that** the polymer particles are kept in constant motion in a vibrating fluidised bed while a gas stream is simultaneously passed through them.

2. A process according to claim 1, **characterised in that** the vibrating fluidised bed is produced by means of a vibrating base plate through which gas may flow.

3. A process according to one of claims 1 or 2, **characterised in that** the base plate vibrates at 200 min⁻¹ to 2000 min⁻¹, preferably at 1400 min⁻¹ to 1600 min⁻¹ and **in that** the amplitude amounts to from 1 to 25 mm, preferably 3 - 10 mm.

4. A process according to one of claims 1 to 3, **characterised in that** the gas stream is a nitrogen stream or a nitrogen/steam stream or a pure steam stream and has a temperature of from 60 °C to 120 °C.

5. A process according to one of claims 1 to 4, **characterised in that** the rubber particles and the gas stream are conveyed in a cross flow relative to each other.

6. A process according to one of claims 1 to 5, **characterised in that** the gas stream is circulated.

7. A process according to one of claims 1 to 6, **characterised in that** the rubber particles are EPM, EPDM and BR.

## Revendications

1. Procédé pour le dégazage de particules polymères en particulier de caoutchouc obtenues à partir de la polymérisation en phase gazeuse, **caractérisé en ce que** les particules polymères sont maintenues en permanence en mouvement dans un lit fluidisé par des vibrations et sont simultanément admises avec un courant gazeux.

2. Procédé selon la revendication 1, **caractérisé en ce que** le lit fluidisé par des vibrations est produit par l'intermédiaire d'un fond vibrant pouvant être traversé par du gaz.

3. Procédé selon l'une quelconque des revendications 1 ou 2, **caractérisé en ce que** le fond oscille à de 200 min⁻¹ à 2000 min⁻¹, de préférence à de 1400 min⁻¹ à 1600 min⁻¹ et **en ce que** l'amplitude est de 1 à 25 mm, de préférence de 3-10 mm.

4. Procédé selon l'une quelconque des revendications 1 à 3, **caractérisé en ce que** le courant gazeux est un courant d'azote ou un courant d'azote/vapeur d'eau ou un courant de vapeur d'eau pure et présente une température de 60°C à 120°C.

5. Procédé selon l'une quelconque des revendications 1 à 4, **caractérisé en ce que** les particules de caoutchouc et le courant gazeux sont en courants inversés.

6. Procédé selon l'une quelconque des revendications 1 à 5, **caractérisé en ce que** le courant gazeux est mis en circulation.

7. Procédé selon l'une quelconque des revendications 1 à 6, **caractérisé en ce que** les particules de caoutchouc sont en EPM, en EPDM et en BR.
